# EUROPEAN PATENT SPECIFICATION

(11) **EP 4 008 703 B1**
(45) Date of publication and mention of the grant of the patent: **28.01.2026**
(21) Application number: 21212045.5
(22) Date of filing: 02.12.2021
(51) Int. Cl.: C04B 35/80, B32B 18/00, C04B 35/565, C04B 35/584, F01D 5/28, F23R 3/00

(54) **CERAMIC COMPONENT**
KERAMISCHE KOMPONENTE
COMPOSANT EN CÉRAMIQUE

(30) Priority: 03.12.2020 US 202017110945
(43) Date of publication of application: 08.06.2022
(73) Proprietor: RTX Corporation, Farmington, CT 06032 (US)
(72) Inventor: READ, Kathryn S., Marlborough, 06447 (US); LAZUR, Andrew J., Laguna Beach, 92651 (US); BAZSHUSHTARI, Afshin, Rolling Hills Estates, 90274 (US)
(74) Representative: Dehns

(56) References cited:
- JP-A- H 107 472
- JP-A- H06 116 031
- US-A1- 2005 181 192
- US-A1- 2014 170 370

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

One example ceramic material is a ceramic matrix composite ("CMC"), which includes, generally, ceramic-based reinforcements (such as fibers) in a ceramic-based material. CMCs have high temperature resistance, and are therefore being considered for use in gas turbine engines, which have areas that operate at very high temperatures. For instance, CMCs are being considered for use in the compressor section, and for airfoils and/or blade outer air seals ("BOAS") in the compressor/turbine sections. Despite its high temperature resistance, there are unique challenges to implementing CMC components in gas turbine engines. JPH107472A discloses a ceramic matrix composite used in e.g. gas turbines and a method of production thereof .

### SUMMARY

A ceramic matrix composite according to an aspect of the present invention is provided in accordance with claim 1.

Optionally, the fiber volume fraction is between about 35-40%.

Optionally, the fiber volume fraction is between about 37-39%.

Optionally, the fibers and matrix comprise silicon carbide (SiC).

Optionally, the ceramic matrix composite makes up a component of a gas turbine engine.

Optionally, the component is one of an airfoil and a blade outer air seal.

A method of fabricating a ceramic matrix composite component according to another aspect of the present invention is provided in accordance with claim 6.

Optionally, wherein the fiber volume fraction is between about 36-39% and the areal weight is between about 240-270 g/m2. The fibers are woven together in an 8 harness satin weave.

Optionally, the fiber volume fraction is between about 36-39% and the areal weight is between about 200-230 g/m2. The fibers are arranged in at least one triaxial braid.

Optionally, the ceramic fibers and the ceramic matrix comprise silicon carbide (SiC).

Optionally, the method includes consolidating the first and second plies prior to the infiltrating step.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates an example CMC component, for the gas turbine engine of Figure 1.
Figure 3 illustrates an example fiber ply for a CMC component such as the example component of Figure 2.
Figures 4A-B illustrate a schematic cutaway view of a high porosity and low porosity CMC material, respectively.
Figures 4C-D show schematic representations of pores in the high porosity and low porosity CMC materials of Figures 4A-B.

### DETAILED DESCRIPTION

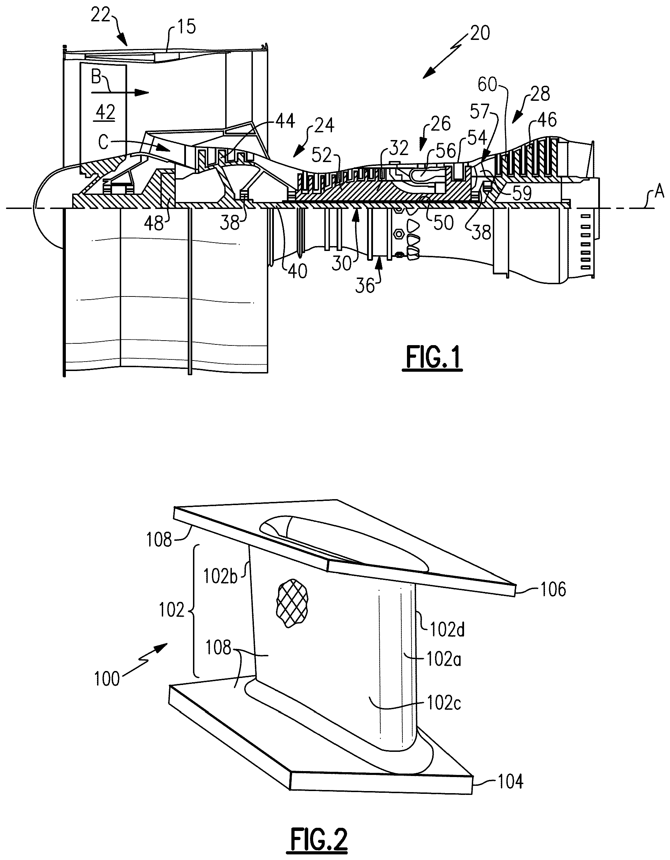

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The low pressure turbine 46 includes airfoils 60. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^0.5. The "Low corrected fan tip speed" as disclosed herein according to one non-limiting embodiment is less than about 1150 ft / second (350.5 meters/second).

Ceramic matrix composites ("CMC") can be employed in various areas of the engine 20 described above and shown in Figure 1 For instance, CMC components, or components that are at least partly CMC, can be used in the combustor section 26, or in the turbine/compressor sections 24/28. Figure 2 shows one non-limiting example CMC component, which is a representative airfoil 100 used in the engine 20 (see also Figure 1). As shown, the airfoil 100 is a turbine vane; however, it is to be understood that, although the examples herein may be described and shown with reference to turbine vanes, this disclosure is also applicable to blades. Moreover, it should be understood that the description herein is applicable to other types of CMC components, and is not limited to airfoils.

In the illustrated example, the airfoil 100 includes an airfoil section 102 that delimits an aerodynamic profile. Airfoil section 102 defines a leading end 102a, a trailing end 102b, and first and second sides 102c/102d that join the leading end 102a and the trailing end 102b. The terminology "first" and "second" as used herein is to differentiate that there are two architecturally distinct components or features. It is to be further understood that the terms "first" and "second" are interchangeable in the embodiments herein in that a first component or feature could alternatively be termed as the second component or feature, and vice versa. In this example, the first side 102c is a pressure side and the second side 102d is a suction side. The airfoil section 102 generally extends in a radial direction relative to the central engine axis A. For a vane, the airfoil section 102 spans from a first or inner platform 104 to a second or outer platform 106. The terms "inner" and "outer" refer to location with respect to the central engine axis A, i.e., radially inner or radially outer. For a blade, the airfoil section 102 would extend from a single inner platform to a free end.

The airfoil section 102 and platforms 104/106 together constitute an airfoil piece. For a blade, the airfoil piece would include only the airfoil section 102 and platform 104. In one example, the airfoil piece is formed of a single, continuous wall 108 that defines the complete or substantially complete shape and contour of the airfoil section 102 and platforms 104/106. In this regard, the airfoil 100 is a unibody construction.

The subsequent description of CMC material may refer to the wall 108 for the unibody example discussed above. However, as noted, the CMC material described herein is applicable to various other uses within the gas turbine engine, including non-unibody airfoil constructions or components for other parts of the gas turbine engine 20 discussed above. Therefore, references to the wall 108 should not be viewed as limiting in this respect.

The wall 108 is formed of a ceramic matrix composite ("CMC") material. CMCs are comprised of a ceramic reinforcement, such as ceramic fibers, in a ceramic matrix. Example ceramic matrices of the CMC are silicon-containing ceramic, such as but not limited to, a silicon carbide (SiC) matrix or a silicon nitride (Si₃N₄) matrix. Example ceramic reinforcement of the CMC are silicon-containing ceramic fibers, such as but not limited to, silicon carbide (SiC) fiber or silicon nitride (Si₃N₄) fibers.

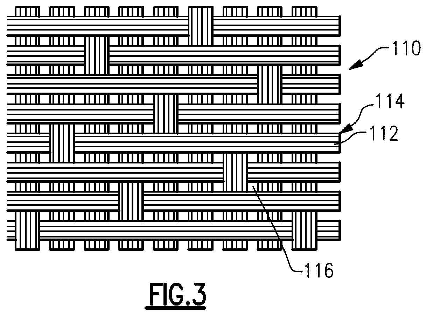

Figure 3 shows a ply 110 of CMC material, which is also schematically shown in a cutaway section in Figure 2. A ply 110 of CMC material consists of ceramic fibers 112 woven or stacked together. In one example, the fibers 112 are arranged into bundles, known as tows 114. A ceramic material 116 is disposed onto the fibers 112 or tows 114. One example CMC is a SiC/SiC CMC in which SiC fibers 112 are disposed within a SiC matrix 116. The wall 108 is therefore comprised of at least one CMC ply 110 and in some examples includes multiple CMC plies 110, such as two, three, or four plies.

In some examples, the fibers 112 and/or tows 114 include an interface coating, which modifies the properties of the fibers 112 and thus the resulting CMC material. An example interface coating can include layers of boron nitride, carbon, or both.

Various weave patterns/fiber arrangements that are known in the art can be employed in the ply 110. For instance, in the example of Figure 5, a harness satin weave is shown. Harness satin weaves are those in which four or more weft fiber tow 114 pass over a warp fiber tow 114, and four or more warp fiber tows 114 pass under a single weft fiber tow 114. In further examples, the ply 110 is a harness weave and has a harness number from 5 to 12 (e.g., 8 harness weave or 12 harness weave). For a harness number of 5, four weft fiber tows 114 pass over a warp fiber tow 114, and four warp fiber tows 114 pass under a single weft fiber tow 114. In other words, the number of fiber tows 114 passed over/under is one less than the numeral of the harness number.

Other weave patterns, such as twill, or fiber arrangements, such as biaxial braids or triaxial braids, are also contemplated, as are unidirectional arrangements of fibers 112/tows 114 or other non-woven arrangements.

In some examples, once the fibers 112/tows 114 are arranged into the ply 110, the ply 110 is stabilized by the application of a binder. In further examples, the binder can also serve to retain the edges of the ply 110, or a mechanical form of edge retention could be used.

The general procedure for forming the ply or plies 110 into a CMC material is as follows. The ply or plies 110 are first preformed, which can include orienting the ply 110 into a desired orientation (which may be based on the weave pattern/fiber arrangement). The ply 110 may be cut, if desired. The ply 110 may also be preformed into a shape near the shape of the desired final component, such as the airfoil wall 108. After preforming, the ply 110 is "layed-up" which includes stacking multiple preformed plies 110. A binder may be used to adhere the plies 110 to one another. After laying up, the plies 110 undergo matrix 116 infiltration. One example method of matrix 116 infiltration is chemical vapor infiltration ("CVI"), which is well-known in the art. In some examples, an optional consolidation step is performed prior to matrix 116 infiltration, which can include compressing the plies 110. After matrix 116 infiltration, the resulting CMC can undergo various further processing steps, such as drying.

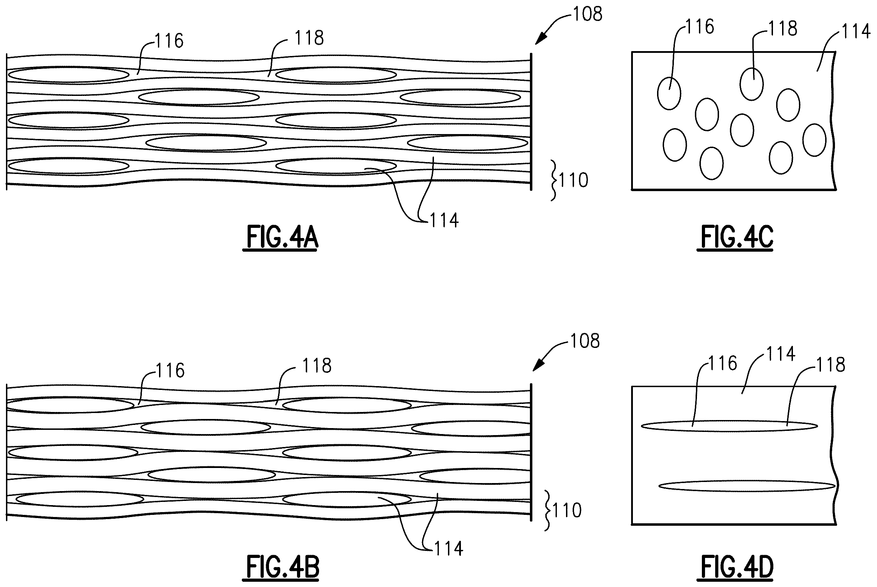

Figures 4A-B show a cutaway view of example high porosity and low porosity CMC materials, respectively. In this example tows 114 are shown, though it should be understood that in other examples tows 114 may not be used, as discussed above. Pores 118 are the spaces between adjacent tows 114. Porosity relates to the amount of space (which is filled with matrix material 116) between adjacent tows 114, and includes the sum of both intertow porosity and interfiber porosity. Porosity is inversely related to fiber volume fraction, which is expressed as a percentage of the volume of a CMC component, such as wall 108, that is filled with fibers 112. In general, the higher the fiber volume fraction of a CMC component, the lower the porosity, and the less space for matrix 116 infiltration.

In general, the matrix material 116 is more uniform when it is deposited in a smaller space with a larger surface area. A schematic representation of the pores 118 is shown in Figures 4C-D. For a high porosity CMC material, the pores 118 can approach the shape of a sphere as shown in Figures 4A/4C. For a low porosity CMC material, the pores 118 are more elongated and thus have a larger surface area, as shown in Figures 4B/4D. More uniform matrix 116 material generally exhibits improved mechanical properties. Moreover, more uniform material 116 material is associated with improved interlaminar properties such as interlaminar strength (which is related to the amount of force that the CMC material can withstand before the individual plies 110 come apart).

In some examples, particulates of matrix 116 material, such as SiC, are provided to the layup prior to infiltration of the matrix 116 material. The particulates can serve as nucleation sites for the deposition of matrix 116 material, which leads to improved matrix 116 uniformity.

In one example, the fiber volume fraction for the CMC material is between about 28-42%. In this range, the matrix uniformity is improved as compared to CMC materials with fiber volume fractions outside of the range, which was confirmed by measuring the thermal diffusivity of the CMC material compared to other CMC materials as well as by x-ray computed tomography imaging. Moreover, the overall interlaminar strength and interlaminar tension of the resulting CMC material was improved as compared to CMC materials with fiber volume fractions outside of that range. In a further example, the fiber volume fraction is between about 35-40%. In a specific example, the fiber volume fraction is between about 36-39%.

The fiber volume fraction of a CMC material is related to certain architectural properties, such as areal weight and fiber architecture (e.g., weave pattern or fiber 112 arrangement) as well as certain processing parameters, such as the amount of compression provided during the optional consolidation step discussed above.

The areal weight of the CMC material is either: between about 240-270 g/m² and the weave is an 8HS weave; or between about 200-230 g/m² and the fibers 112 are arranged in triaxial braid(s).

One specific example CMC material has the following properties. The fiber volume fraction is between about 37-39%. The areal weight is between about 200-230 g/m². The fibers are arranged in triaxial braid(s).

Another specific example CMC material has the following properties. The fiber volume fraction is between about 36-39%. The areal weight is between about 240-270 g/m². The fibers are arranged in 8-harness satin weave.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A ceramic matrix composite, comprising:
at least one ply (110) of ceramic fibers (112); and
a ceramic matrix material (116) deposited on the ceramic fibers (112), wherein a fiber volume fraction is between about 35-45% and **characterised in that**:
an areal weight is between about 240-270 g/m² and the fibers (112) are woven together in an 8 harness satin weave; or
an areal weight is between about 200-230 g/m² and the fibers (112) are arranged in at least one triaxial braid.

2. The ceramic matrix composite of claim 1, wherein the fiber volume fraction is between about 35-40%, for example, between about 37-39%.

3. The ceramic matrix composite of claim 1, wherein the fiber volume fraction is between about 36-39%.

4. The ceramic matrix composite of any preceding claim, wherein the fibers (112) and matrix (116) comprise silicon carbide.

5. The ceramic matrix composite of any preceding claim, wherein the ceramic matrix composite forms at least part (108) of a component of a gas turbine engine (20), for example, one of an airfoil (59, 60, 100) and a blade outer air seal.

6. A method of fabricating a ceramic matrix composite component, comprising:
providing a ply (110), the ply (110) including a plurality of ceramic fibers (112);
laying up the ply (110) with a second ply (110), the second ply (110) including a plurality of ceramic fibers (112); and
infiltrating the first and second plies (110) with a ceramic matrix material (116), wherein a fiber volume fraction is between about 35-45% and **characterised in that**:
an areal weight is between about 240-270 g/m² and the fibers (112) are woven together in an 8 harness satin weave; or
an areal weight is between about 200-230 g/m² and the fibers (112) are arranged in at least one triaxial braid.

7. The method of claim 6, wherein the fiber volume fraction is between about 36-39% and the areal weight is between about 240-270 g/m², and wherein the fibers (112) are woven together in an 8 harness satin weave.

8. The method of claim 6, wherein the fiber volume fraction is between about 36-39% and the areal weight is between about 200-230 g/m², and wherein the fibers (112) are arranged in at least one triaxial braid.

9. The method of any of claims 6 to 8, wherein the ceramic fibers (112) and the ceramic matrix (116) comprise silicon carbide.

10. The method of any of claims 6 to 9, further comprising consolidating the first and second plies (110) prior to the infiltrating step.

## Patentansprüche

1. Keramikmatrix-Verbundwerkstoff, umfassend:
mindestens eine Lage (110) aus Keramikfasern (112); und
ein Keramikmatrixmaterial (116), das auf den Keramikfasern (112) abgeschieden ist, wobei ein Faservolumenanteil zwischen etwa 35 und 45 % liegt, und **dadurch gekennzeichnet, dass**:
ein Flächengewicht zwischen etwa 240 und 270 g/m² liegt und die Fasern (112) in einer 8-fach-Satinbindung miteinander verwoben sind; oder
ein Flächengewicht zwischen etwa 200-230 g/m² liegt und die Fasern (112) in mindestens einem triaxialen Geflecht angeordnet sind.

2. Keramikmatrix-Verbundwerkstoff nach Anspruch 1, wobei der Faservolumenanteil zwischen etwa 35 und 40 %, beispielsweise zwischen etwa 37 und 39 %, liegt.

3. Keramikmatrix-Verbundwerkstoff nach Anspruch 1, wobei der Faservolumenanteil zwischen etwa 36 und 39 % liegt.

4. Keramikmatrix-Verbundwerkstoff nach einem der vorhergehenden Ansprüche, wobei die Fasern (112) und die Matrix (116) Siliziumkarbid umfassen.

5. Keramikmatrix-Verbundwerkstoff nach einem der vorhergehenden Ansprüche, wobei der Keramikmatrix-Verbundwerkstoff zumindest einen Teil (108) einer Komponente eines Gasturbinentriebwerks (20), beispielsweise eines Schaufelblatts (59, 60, 100) oder einer äußeren Schaufelluftdichtung, bildet.

6. Verfahren zum Herstellen einer Keramikmatrix-Verbundwerkstoffkomponente, umfassend:
Bereitstellen einer Lage (110), wobei die Lage (110) eine Vielzahl von Keramikfasern (112) aufweist;
Legen einer zweiten Lage (110) auf die Lage (110), wobei die zweite Lage (110) eine Vielzahl von Keramikfasern (112) aufweist; und
Infiltrieren der ersten und der zweiten Lage (110) mit einem Keramikmatrixmaterial (116), wobei ein Faservolumenanteil zwischen etwa 35 und 45 % liegt, und **dadurch gekennzeichnet, dass**:
ein Flächengewicht zwischen etwa 240 und 270 g/m² liegt und die Fasern (112) in einer 8-fach-Satinbindung miteinander verwoben sind; oder
ein Flächengewicht zwischen etwa 200 und 230 g/m² liegt und die Fasern (112) in mindestens einem triaxialen Geflecht angeordnet sind.

7. Verfahren nach Anspruch 6, wobei der Faservolumenanteil zwischen etwa 36 und 39 % liegt und das Flächengewicht zwischen etwa 240 und 270 g/m² liegt und wobei die Fasern (112) in einer 8-fach-Satinbindung miteinander verwoben sind.

8. Verfahren nach Anspruch 6, wobei der Faservolumenanteil zwischen etwa 36 und 39 % liegt und das Flächengewicht zwischen etwa 200 und 230 g/m² liegt und wobei die Fasern (112) in mindestens einem triaxialen Geflecht angeordnet sind.

9. Verfahren nach einem der Ansprüche 6 bis 8, wobei die Keramikfasern (112) und die Keramikmatrix (116) Siliziumkarbid umfassen.

10. Verfahren nach einem der Ansprüche 6 bis 9, ferner umfassend Verfestigen der ersten und der zweiten Lage (110) vor dem Infiltrationsschritt.

## Revendications

1. Composite à matrice céramique, comprenant :
au moins une couche (110) de fibres céramiques (112) ; et
un matériau de matrice céramique (116) déposé sur les fibres céramiques (112), dans lequel une fraction volumique de fibres est comprise entre environ 35 % et environ 45 % et **caractérisé en ce que** :
un poids surfacique est compris entre environ 240 g/m² et environ 270 g/m² et les fibres (112) sont tissées ensemble dans une armure satin à 8 harnais ; ou
un poids surfacique est compris entre environ 200 g/m² et environ 230 g/m² et les fibres (112) sont agencées dans au moins une tresse triaxiale.

2. Composite à matrice céramique selon la revendication 1, dans lequel la fraction volumique de fibres est comprise entre environ 35 % et environ 40 %, par exemple entre environ 37 % et environ 39 %.

3. Composite à matrice céramique selon la revendication 1, dans lequel la fraction volumique de fibres est comprise entre environ 36 % et environ 39 %.

4. Composite à matrice céramique selon une quelconque revendication précédente, dans lequel les fibres (112) et la matrice (116) comprennent du carbure de silicium.

5. Composite à matrice céramique selon une quelconque revendication précédente, dans lequel le composite à matrice céramique forme au moins une partie (108) d'un composant d'un moteur à turbine à gaz (20), par exemple, l'un d'un profil aérodynamique (59, 60, 100) et d'un joint d'étanchéité à l'air extérieur de pale.

6. Procédé de fabrication d'un composant composite à matrice céramique, comprenant :
la fourniture d'une couche (110), la couche (110) comportant une pluralité de fibres céramiques (112) ;
la superposition de la couche (110) avec une seconde couche (110), la seconde couche (110) comportant une pluralité de fibres céramiques (112) ; et
l'infiltration des première et seconde couches (110) avec un matériau de matrice céramique (116), dans lequel une fraction volumique de fibres est comprise entre environ 35 % et environ 45 % et **caractérisé en ce que** :
un poids surfacique est compris entre environ 240 g/m² et environ 270 g/m² et les fibres (112) sont tissées ensemble dans une armure satin à 8 harnais ; ou
un poids surfacique est compris entre environ 200 g/m² et environ 230 g/m² et les fibres (112) sont agencées dans au moins une tresse triaxiale.

7. Procédé selon la revendication 6, dans lequel la fraction volumique de fibres est comprise entre environ 36 % et environ 39 % et le poids surfacique est compris entre environ 240 g/m² et environ 270 g/m², et dans lequel les fibres (112) sont tissées ensemble dans une armure satin à 8 harnais.

8. Procédé selon la revendication 6, dans lequel la fraction volumique de fibres est comprise entre environ 36 % et environ 39 % et le poids surfacique est compris entre environ 200 g/m² et environ 230 g/m², et dans lequel les fibres (112) sont agencées dans au moins une tresse triaxiale.

9. Procédé selon l'une quelconque des revendications 6 à 8, dans lequel les fibres céramiques (112) et la matrice céramique (116) comprennent du carbure de silicium.

10. Procédé selon l'une quelconque des revendications 6 à 9, comprenant également la consolidation des première et seconde couches (110) avant l'étape d'infiltration.
